# EUROPÄISCHE PATENTSCHRIFT

(11) **EP 1 865 336 B1**
(45) Veröffentlichungstag und Bekanntmachung des Hinweises auf die Patenterteilung: **13.08.2008**
(21) Anmeldenummer: 07107674.9
(22) Anmeldetag: 08.05.2007
(51) Int. Cl.: G01S 7/481, G01S 17/42, G01S 7/489, G01S 7/497

(54) **Abtastender Laserradar mit einem Strahlteiler**
Scanning laser radar with beam splitter
Radar à laser à balayage avec un séparateur de faisceau

(30) Priorität: 10.06.2006 DE 102006027063
(43) Veröffentlichungstag der Anmeldung: 12.12.2007
(73) Patentinhaber: SICK AG, 79183 Waldkirch (DE)
(72) Erfinder: Mack, Stefan, Dr., 79108 Freiburg (DE)
(74) Vertreter: Ludewigt, Christoph

(56) Entgegenhaltungen:
- EP-A- 1 795 913
- DE-A1- 4 340 756

## Beschreibung

Die Erfindung betrifft eine Laserradarvorrichtung nach dem Oberbegriff des Anspruchs 1.

Eine derartige Laserradarvorrichtung ist aus der DE 43 40 756 A1 bekannt. In dieser Laserradarvorrichtung ist ein Impulslaser vorhanden, der gesteuert aufeinanderfolgende Lichtimpulse in einen Messbereich aussendet. Mit einer Lichtempfangsanordnung werden die an einem Objekt im Messbereich zurückgeworfenen Lichtimpulse aufgenommen und in Form von elektrischen Signalen einer Auswerteeinheit zugeführt. In dieser Auswerteeinheit wird unter Berücksichtigung der Lichtgeschwindigkeit aus der Zeit zwischen Aussendung und Empfang des Lichtimpulses ein für den Abstand des Objektes zur Laserradarvorrichtung repräsentatives Abstandssignal ermittelt. Zwischen dem Impulslaser und dem Messbereich ist eine Lichtablenkeinheit angeordnet, mittels derer die Lichtimpulse fortlaufend in veränderte Richtungen durch den Messbereich gelenkt werden, so dass der gesamte Messbereich durchleuchtet wird.

Laserradarvorrichtungen dieser Art werden in vielfältiger Weise verwendet. Insbesondere werden damit Objekte innerhalb eines Gefahrenbereiches detektiert. Aufgrund der Abstandsermittlungsfähigkeit sind derartige Laserradarvorrichtungen in der Lage, nicht nur die Anwesenheit eines Objektes detektieren zu können, sondern es kann aus der gewonnenen Abstandsinformation, verbunden mit der Messung des Drehwinkels der Lichtablenkeinheit, die genaue Position des Objektes ermittelt werden.

Der Begriff "Licht" ist dabei nicht auf das sichtbare Licht beschränkt. Unter "Licht" sind allgemein elektromagnetische Strahlen, also UV-Licht, IR-Licht sowie sichtbares Licht zu verstehen, welche üblicherweise für den Betrieb von optoelektronischen Sensoren eingesetzt werden können.

Nachteilig am bekannten Stand der Technik ist es, wenn derartige Laserradarvorrichtungen einen großen Messbereich überwachen müssen und innerhalb dieses Messbereichs Objekte erkannt werden sollen, die ein stark unterschiedliches Remissionsverhalten aufweisen. Die Laserradarvorrichtungen nach dem Stand der Technik weisen deshalb in der Regel permanent eine sehr hohe Signaldynamik im Bereich der Lichtempfangsanordnung inklusive der nachfolgenden Signalverarbeitung auf. Eine solch hohe Signaldynamik ist nicht nur mit erheblichen Herstellkosten verbunden, sondern kann zu Funktionsstörungen dieser Laserradarvorrichtung führen. Ursachen für derartige Funktionsstörungen können beispielsweise externe Störlichtquellen sein, die sich in unmittelbarer Nähe des Messbereichs befinden, so dass ihr Licht zur Lichtempfangsanordnung der Laserradarvorrichtung gelangen kann. Dadurch wird die Lichtempfangsanordnung, die hinsichtlich ihrer Detektionsempfindlichkeit auf das niedrigste zu erwartende Signal von dunklen Objekten im Messbereich ausgelegt sein muss, deutlich gestört, weil die Störlichtquellen ein erhebliches Rauschen erzeugen, das dem eigentlichen Messsignal überlagert ist. Der gleiche Effekt tritt auch dann auf, wenn der von der Laserradarvorrichtung ausgesandte Lichtimpuls auf ein Objekt fällt, das eine sehr hohe Remission aufweist und sich gleichzeitig noch in unmittelbarer Nähe zur Laserradarvorrichtung befindet. Durch diese hohen Empfangssignale entstehen Sättigungseffekte bzw. Rauscheinflüsse, welche die Genauigkeit der Abstandsmessung deutlich verschlechtern. Die aus dem Stand der Technik bekannten Lösungsansätze zur Vermeidung dieser Probleme bei optoelektronischen Sensoren basieren oft darauf, dass zur Unterdrückung dieser Störeinflüsse Mehrfachmessungen durchgeführt werden, um Beispielsweise über Mittelwertbildungen den Messfehler zu verkleinern. Auch ist bekannt, fehlerbehaftete Messungen mit veränderter Detektionsempfindlichkeit der Lichtempfangsanordnung zu wiederholen. Derartige Verfahren sind jedoch bei richtungsveränderlichen Laserradarvorrichtungen nicht anwendbar, weil sich die Strahlrichtung bei zwei oder mehr aufeinanderfolgenden Lichtimpulsen derart verändert hat, dass jeweils unterschiedliche Objekte bzw. Objektabschnitte getroffen werden, die nicht miteinander in Beziehung gebracht werden können. Diese Auswirkung könnte zwar reduziert werden indem die Veränderung der Lichtablenkrichtung entsprechend reduziert würde, was jedoch deshalb nicht möglich ist, weil damit im gleichen Maße die Ansprechgeschwindigkeit der Laserradarvorrichtung zurückgehen würde.

Der Erfindung liegt deshalb die Aufgabe zugrunde, eine Laserradarvorrichtung nach dem Lichtlaufzeitprinzip zu schaffen, bei der zur Vermeidung von Messfehlern die Detektionsempfindlichkeit der Laserradarvorrichtung an das unterschiedliche Remissionsverhalten sowie an die unterschiedlichen Abstände der Objekte angepasst wird und dass diese Anpassung der Detektionsempfindlichkeit keine Auswirkungen auf die Ansprechgeschwindigkeit der Laserradarvorrichtung zur Folge hat.

Die Aufgabe wird ausgehend von einer Vorrichtung der einleitend beschriebenen Art durch die kennzeichnenden Merkmale des Anspruchs 1 gelöst. In den Unteransprüchen sind Maßnahmen für vorteilhafte Ausführungsformen bzw. Weiterbildungen der Erfindung genannt.

Danach ist erfindungsgemäß vorgesehen, dass in der Lichtablenkeinheit der Laserradarvorrichtung zusätzlich ein optisches Strahlteilelement eingebaut ist, um die vom Impulslaser ausgesandten Lichtimpulse energetisch in einen Hauptstrahl und einen Vortaststrahl zu trennen. Dabei wird mit dem optischen Strahlteilelement zwischen dem Hauptstrahl und dem Vortaststrahl eine konstante Winkelabweichung in Richtung der Lichtablenkung herbeigeführt. Gleichzeitig ist in der Lichtempfangsanordnung der Laserradarvorrichtung für den Empfang der am Objekt zurückgeworfenen Lichtimpulse des Vortaststrahls ein zusätzliches Lichtempfangselement vorhanden.

Der Vorteil dieser Erfindung ist darin zu sehen, dass in Abhängigkeit von der Lichtstärke auf dem Lichtempfangselement des Vortaststrahls die Detektionsempfindlichkeit für den Pfad des Hauptstrahls eingestellt werden kann. Durch diese mit Hilfe des Vortaststrahls ermittelte Remissionsmessung wird die aktuelle Detektionsempfindlichkeit des Hauptstrahls so eingestellt, dass die vom Hauptstrahl an einem Objekt remittierte Lichtmenge auf dem Lichtempfangselement des Hauptstrahls im optimalen Arbeitsbereich der Lichtempfangsanordnung liegt.

Besonders vorteilhaft an dieser Laserradarvorrichtung ist die Tatsache, dass mit dem Vortaststrahl und dem Hauptstrahl ein parallel arbeitendes Messsystem vorhanden ist. Dadurch ist es möglich, eine Remissionsvorhersage für den Hauptstrahl zu generieren, ohne die Ansprechgeschwindigkeit der Laserradarvorrichtung zu reduzieren.

Die Einstellung der Detektionsempfindlichkeit für den Pfad des Hauptstrahls wird in einer bevorzugten Ausführungsform damit ausgeführt, dass die Schaltschwelle und/oder der Verstärkungsfaktor in der elektrischen Auswerteeinheit der Lichtempfangsanordnung, welcher dem Hauptstrahl zugeordnet ist, verändert wird. Mit dieser an die zu erwartenden Remissionswerte angepassten Detektionsempfindlichkeit ist die Laserradarvorrichtung in vielen Betriebszuständen wesentlich unempfindlicher gegen Störeinwirkungen, die zum Beispiel durch Fremdlichtquellen hervorgerufen werden können.

Nach einer weiteren vorteilhaften Ausführungsform der Erfindung ist es vorgesehen, die APD- (Avalanche Photo Diode) Spannung in der Lichtempfangsanordnung des Hauptstrahls in Abhängigkeit von der gemessenen Signalhöhe auf dem Lichtempfangselement, das dem Vortaststrahl zugeordnet ist, einzustellen. Mit dieser Maßnahme wird neben der geringeren Fremdlichtabhängigkeit der Laserradarvorrichtung auch eine bessere Temperaturkompensation bei der APD erreicht. Weiter wird mit dieser Maßnahme bei sehr hohen Remissionen die Messgenauigkeit verbessert, da die nachgeordnete elektrische Auswerteeinheit weniger stark übersteuert wird.

In einer weiteren erfinderischen Ausgestaltung der Laserradarvorrichtung sind in einer elektrischen Ansteuereinheit für den Impulslaser Mittel vorhanden, um die Ausgangsleistung der Lichtimpulse in Abhängigkeit von der mit dem Vortaststrahl gemessenen Signalhöhe einzustellen. Mit dieser Leistungsanpassung des Impulslasers an die vorherrschenden Einsatzbedingungen wird der Impulslaser in vorteilhafter Weise in einem Betriebsmodus betrieben, der den Impulslaser nicht mehr als notwendig belastet. Auf diese Weise wird die Lebensdauer des Impulslasers wesentlich verbessert.

Erfindungsgemäß ist das optische Strahlteilelement auf der Lichtablenkeinheit der Laserradarvorrichtung so ausgelegt, dass nur ein geringfügiger Energieanteil vom Lichtimpuls des Impulslasers in den Vortaststrahl eingespeist wird. Insbesondere wenn, wie in einer bevorzugten Ausführungsform der Erfindung vorgeschlagen, der Energieanteil im Vortaststrahl beispielsweise nur ca. 1 % der vom Impulslaser abgegebenen Impulsenergie aufweist, wird der Hauptstrahl praktisch nicht geschwächt, d. h. die Systemempfindlichkeit der Laserradarvorrichtung wird durch die Abtrennung des Vortaststrahls nur unmerklich reduziert.

In einer besonders bevorzugten Ausführungsform der Erfindung ist der Winkel zwischen dem voreilenden Vortaststrahl und dem Hauptstrahl genau so groß wie die Winkeländerung, die der Hauptstrahl zwischen zwei aufeinanderfolgenden Lichtimpulsen zurücklegt. Dadurch wird erreicht, dass der Lichtimpuls des Hauptstrahls genau in die Richtung ausgesandt wird, in die der Vortaststrahl beim vorhergehenden Lichtimpuls ausgerichtet war. Auf diesem Wege ist die aus dem Vortaststrahl abgeleitete Remissionsvorhersage für den Hauptstrahl am besten möglich, weil sowohl der Vortaststrahl als auch der Hauptstrahl bei einem ggf. vorhandenen Objekt auf die gleiche Objektstelle auftreffen.

Zweckmäßigerweise ist das optische Strahlteilelement zur Trennung von Vortaststrahl und Hauptstrahl ein optisches Beugungsgitter, bei dem beispielsweise der Vortaststrahl in der ersten Beugungsordnung liegt und der Hauptstrahl in der nullten Beugungsordnung verläuft. Das optische Strahlteilelement in Form eines Beugungsgitters auszuführen hat den Vorteil, dass insbesondere die Energieverteilung und der Beugungswinkel zwischen beispielsweise der ersten und der nullten Ordnung, d. h. dem Vorstrahl und dem Hauptstrahl, leicht festlegbar ist.

Alternativ kann das auf der Lichtablenkeinheit angebrachte optische Strahlteilelement zur Trennung von Vortaststrahl und Hauptstrahl mit Hilfe eines keilförmigen Rückflächenspiegels realisiert werden. Diese Gestaltungsart ist speziell unter Kostengesichtspunkten vorteilhaft, weil nur der rotierende Drehspiegel in der Lichtablenkeinheit durch einen mit einem Keilwinkel zwischen der Vorderfläche und der Rückfläche versehenen Rückflächenspiegel getauscht werden muss.

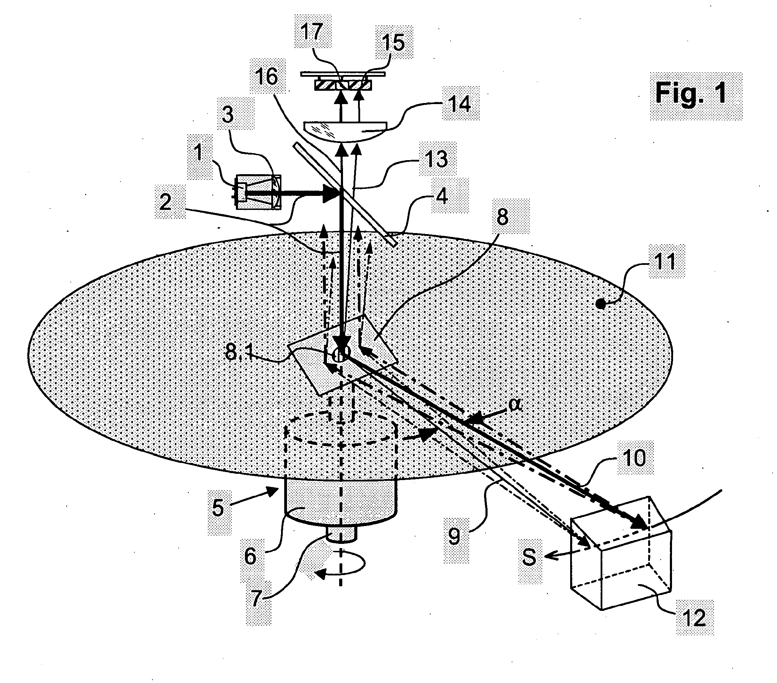

Die Erfindung wird im Folgenden beispielhaft unter Bezugnahme auf die Zeichnung näher beschrieben, deren einzige Figur 1 eine schematische, perspektivische Ansicht einer Laserradarvorrichtung mit einem Hauptstrahl und einem Vortaststrahl zeigt.

Von einem Impulslaser 1 werden in einem Lichtstrahl 2 aufeinanderfolgende Lichtimpulse ausgesandt. Zur Beeinflussung der Lichtstrahlcharakteristik ist dem Impulslaser 1 ein Sendeobjektiv 3 zugeordnet. Nach dem Austritt des Lichtstrahls aus dem Sendeobjektiv 3 wird der Lichtstrahl 2 an einem Teilerspiegel 4 derart umgelenkt, dass er in einer Flucht zu der Drehachse einer Lichtablenkeinheit 5 verläuft. Die in Fig. 1 dargestellten Komponenten der Lichtablenkeinheit 5 sind ein Motor 6 mit einer Motorachse 7 sowie ein auf der Motorachse 7 unter einem Winkel von 45° angeordneter Drehspiegel 8. Verbunden mit dem Drehspiegel 8 ist ein, vorzugsweise an den Querschnitt des Lichtstrahls 2 angepasstes optisches Strahlteilelement in Form eines Beugungsgitters 8.1 angebracht, das den am Drehspiegel 8 um 90° umgelenkten Lichtstrahl in zwei Teilstrahlen, d. h. in einen Vortaststrahl 9 und einen Hauptstrahl 10 aufspaltet. Das Beugungsgitter 8.1 ist dabei so dimensioniert, dass der überwiegende Energieanteil des Lichtstrahls 2 in den Hauptstrahl 10 eingelenkt wird, während nur ein geringer Energieanteil in den Vortaststrahl 9 einfließt. Mit Drehung der Motorachse 7 verändern der Vortaststrahl 9 und der Hauptstrahl 10 fortlaufend ihre Abstrahlrichtung. Durch diese Bewegung entlang einer Scanrichtung S kreieren der Vortaststrahl 9 und der Hauptstrahl 10 somit eine Scanebene 11, in dessen Zentrum die Drehachse der Lichtablenkeinheit 5 steht. Festgelegt durch die Dimensionierung des Beugungsgitters 8.1 ist zwischen dem Vortaststrahl9 und dem Hauptstrahl 10 ein in Richtung der Scanebene 11 gemessener Vorlaufwinkel α vorhanden. Wenn sich, beeinflusst durch die Lichtablenkeinheit 5, der Vortaststrahl 9 und der Hauptstrahl 10 in Scanrichtung S bewegen, wird ein ggf. vorhandenes Objekt 12 zunächst vom Vortaststrahl 9 erfasst. Beim Auftreffen des Vortaststrahls 9 auf das Objekt 12 treten abhängig von der Oberflächenbeschaffenheit des Objekts 12 mehr oder weniger starke Reflexionen auf. Ein Teil des reflektierten Lichts wird dabei nahezu in sich zurückreflektiert und trifft als leicht divergierender Streukegel in entgegengesetzter Richtung wieder auf den Drehspiegel 8. Aufgrund dieser Streuung überleuchtet der reflektierte Vortaststrahl das Beugungsgitter 8.1 deutlich, so dass der reflektierte Vortaststrahl 13 im Wesentlichen nur über den Drehspiegel 8 zum Teilerspiegel 4 gelangt. Da der Vortaststrahl 9 bei seiner Aussendung durch das Beugungsgitter 8.1 eine zusätzliche Richtungsänderung erfahren hat, wird auch der reflektierte Streukegel am Drehspiegel 8 eine entsprechende Winkelabweichung zum Lichtstrahl 2 aufweisen. Der Teilerspiegel 4 ist so ausgelegt, dass von diesem reflektierten Vortaststrahl 13 eine Teilmenge ohne Richtungsänderung auf einen ringförmigen Außenbereich einer Empfangsoptik 14 gelangen kann. Im weiteren Verlauf wird der reflektierte Vortaststrahl 13 dann mittels der Empfangsoptik 14 auf einem ringförmigen Lichtempfangselement 15 fokussiert. Mit Hilfe einer in Figur 1 nicht dargestellten Auswerteeinheit, die dem Lichtempfangselement 15 nachgeschaltet ist, wird die Größe der auf dem ringförmigen Lichtempfangselement 15 auftreffende Lichtenergie ermittelt. Diese so ermittelte Lichtenergie ist sehr stark vom Abstand des Objektes 12 zur Laserradarvorrichtung abhängig. Befindet sich das Objekt in einem großen Abstand zur Laserradarvorrichtung, so wird die Lichtenergie auf dem Lichtempfangselement 15 weit geringer sein, als wenn das gleiche Objekt sich näher bei der Laserradarvorrichtung befindet. Eine ebenso große Abhängigkeit der Lichtenergie auf dem Lichtempfangselement 15 wird durch das Remissionsverhalten des Objektes 12 verursacht. So ist zum Beispiel die Lichtenergie auf dem Lichtempfangselement 15 beim Auftreffen des Vortaststrahls 9 auf eine weiße Wand vielfach höher, als beim Auftreffen des Vortaststrahls 9 auf eine raue dunkle Oberfläche.

Mit der Drehung der Lichtablenkeinheit 5 trifft nach dem Vortaststrahl 9 auch der Hauptstrahl 10 auf das Objekt 12 auf. Analog zur Reflexion des Vortaststrahls 9 an der Oberfläche des Objektes 12 tritt der gleiche Vorgang zeitversetzt zum Vortaststrahl 9 auch beim Hauptstrahl 10 auf, d. h. ein Anteil des am Objekt 12 reflektierten Lichtes vom Hauptstrahl 10 wird als leicht divergenter Streukegel auf den Drehspiegel 8 auftreffen. Auch in diesem Fall wird das Beugungsgitter 8.1 überleuchtet, so dass der Streukegel des reflektierten Hauptstrahls 10 im Wesentlichen über den Drehspiegel 8 umgelenkt und der Empfangsoptik 14 zugeleitet wird. Abweichend zum reflektierten Vortaststrahl 13 wurde der ausgesandte Hauptstrahl 10 am Beugungsgitter 8.1 nicht zusätzlich abgelenkt, so dass der reflektierte Hauptstrahl auch keine Winkelabweichung zum Lichtstrahl 2 aufweist. Dadurch trifft der reflektierte Hauptstrahl 16 auf den zentralen Bereich der Empfangsoptik 14 auf und wird deshalb auch auf ein zentrales Lichtempfangselement 17 fokussiert. Auch das auf dem zentralen Lichtempfangselement 17 generierte Signal wird der Auswerteeinheit zugeführt. Die gleiche Abhängigkeit der Lichtenergie hinsichtlich dem Objektabstand und dem Remissionsverhalten treten natürlich auch beim Hauptstrahl 16 auf. Diese große Streubreite bei der Lichtenergie auf dem Lichtempfangselement 17 kann jedoch in der Auswerteeinheit zu Einschränkung in der Messgenauigkeit führen. Dies führt dazu, dass bei der Ermittlung der Zeit, die zwischen der Aussendung eines Lichtimpulses vom Impulslaser 1 und dem Empfang des an einem Objekt 12 reflektierten Lichtimpuls auf dem Lichtempfangselement 17 vergangen ist, Ungenauigkeiten auftreten, d. h. das für den Abstand des Objektes zur Laserradarvorrichtung repräsentative Abstandssignal ist ggf. fehlerhaft. Um diese Fehler bei der Abstandsbestimmung mit dem Hauptstrahl zu vermeiden, wird das mit dem Vortaststrahl 9 ermittele Messergebnis dazu verwendet, um daraus eine Remissionsvorhersage für den Hauptstrahl 16 abzuleiten. So kann zum Beispiel in Abhängigkeit von dieser Remissionsvorhersage für den Hauptstrahl 16 die Stärke des nächsten, von dem Impulslaser ausgesandten Lichtimpuls so gewählt werden, dass die dann am Lichtempfangselement 17 vorherrschende Lichtenergie im optimalen Arbeitsbereich der Lichtempfangseinrichtung liegt.

## Patentansprüche

1. Laserradarvorrichtung nach dem Lichtlaufzeitprinzip mit einem Impulslaser (1), der gesteuert aufeinanderfolgende Lichtimpulse in einen Messbereich aussendet, einer Lichtempfangsanordnung (17), welche die an einem Objekt im Messbereich zurückgeworfenen Lichtimpulse aufnimmt und in Form von elektrischen Signalen einer Auswerteeinheit zuführt, die unter Berücksichtigung der Lichtgeschwindigkeit aus der Zeit zwischen Aussendung und Empfang des Lichtimpulses ein für den Abstand des Objektes zur Laserradarvorrichtung repräsentatives Abstandssignal ermittelt sowie einer zwischen dem Impulslaser und dem Messbereich angeordneten Lichtablenkeinheit (5), mittels derer die Lichtimpulse fortlaufend in veränderte Richtungen durch den Messbereich gelenkt werden, **dadurch gekennzeichnet, dass** in der Lichtablenkeinheit (5) züsätzlich ein optisches Strahlteilelement eingebaut ist, um die auftreffenden Lichtimpulse energetisch in einen Hauptstrahl (10) und einen Vortaststrahl (9) zu trennen, dass mit dem optischen Strahlteilelement zwischen dem Hauptstrahl und dem Vortaststrahl eine konstante Winkelabweichung (α) in Richtung der Lichtablenkung herbeigeführt wird und dass zum Empfang der am Objekt zurückgeworfenen Lichtimpulse des Vortaststrahls (9) eine zusätzliche Lichtempfangsanordnung (15) vorhanden ist.

2. Laserradarvorrichtung nach Anspruch 1, **dadurch gekennzeichnet, dass** in einer elektrischen Signalverarbeitungsstufe, die der Lichtempfangsanordnung (17) des Hauptstrahls (10) nachgeordnet ist, Mittel vorhanden sind, um die Detektionsempfindlichkeit in Abhängigkeit von der gemessenen Signalhöhe auf der dem Vortaststrahl (9) zugeordneten Lichtempfangsanordnung (15) einzustellen.

3. Laserradarvorrichtung nach Anspruch 1, **dadurch gekennzeichnet, dass** in der Lichtempfangsanordnung (17) des Hauptstrahls (10) Mittel vorhanden sind, um die Verstärkung einer Avalanche Photo Diode in Abhängigkeit von der gemessenen Signalhöhe auf der dem Vortaststrahl (9) zugeordneten Lichtempfangsanordnung (15) einzustellen.

4. Laserradarvorrichtung nach Anspruch 1, **dadurch gekennzeichnet, dass** in einer elektrischen Ansteuereinheit für den Impulslaser (1) Mittel vorhanden sind, um die Ausgangsleistung der Lichtimpulse in Abhängigkeit von der gemessenen Signalhöhe auf der dem Vortaststrahl (9) zugeordneten Lichtempfangsanordnung (15) einzustellen.

5. Laserradarvorrichtung nach einem der vorhergehenden Ansprüche, **dadurch gekennzeichnet, dass** das optische Strahlteilelement nur einen geringfügigen Energieanteil von dem auftreffenden Lichtimpuls in den Vortaststrahl (9) einspeist.

6. Laserradarvorrichtung nach einem der vorhergehenden Ansprüche, **dadurch gekennzeichnet, dass** das optische Strahlteilelement von dem auftreffenden Lichtimpuls vorzugsweise nur einen Energieanteil von kleiner 1 % in den Vortaststrahl (9) einspeist.

7. Laserradarvorrichtung nach einem der vorhergehenden Ansprüche, **dadurch gekennzeichnet, dass** durch das optische Strahlteilelement ein Winkel (α) zwischen dem Vortaststrahl (9) und dem Hauptstrahl (10) hervorgerufen wird, welcher so groß ist wie die Winkeländerung, den die Lichtablenkeinheit (5) zwischen zwei Lichtimpulsen verursacht.

8. Laserradarvorrichtung nach einem der vorhergehenden Ansprüche, **dadurch gekennzeichnet, dass** das auf der Lichtablenkeinheit (5) angebrachte optische Strahlteilelement zur Trennung von Vortaststrah (9) und Hauptstrahl (10) ein optisches Beugungsgitter (8.1) ist.

9. Laserradarvorrichtung nach einem der vorhergehenden Ansprüche, **dadurch gekennzeichnet, dass** das auf der Lichtablenkeinheit (5) angebrachte optische Strahlteilelement zur Trennung von Vortaststrahl (9) und Hauptstrahl (10) ein keilförmiger Rückflächenspiegel ist.

## Claims

1. A laser radar device in accordance with the elapsed time principle comprising a pulsed laser (1) which transmits sequential light pulses into a measurement region in a controlled manner, a light receiving arrangement (17) which receives the light pulses reflected at an object in the measurement region and feeds them in the form of electrical signals to an evaluation unit which determines a distance signal representative of the distance of the object from the laser radar device from the time between the transmission and the reception of the light pulse while taking account of the speed of light, as well as a light deflection unit (5) which is arranged between the pulsed laser and the measurement region and by means of which the light pulses are directed continuously through the measurement region in varied directions, **characterized in that** an optical beam splitting element is additionally installed in the light deflection unit (5) to divide the energy of the incident light pulses into a main beam (10) and a pre-sensing beam (9); **in that** a constant angular difference (α) is formed between the main beam and the pre-sensing beam in the direction of the light deflection by the optical beam splitting element; and **in that** an additional light receiving arrangement (15) is present for the reception of the light pulses of the pre-sensing beam (9) reflected at the object.

2. A laser radar device in accordance with claim 1, **characterized in that** means are present in an electrical signal processing stage disposed downstream of the light reception arrangement (17) of the main beam (10) to adjust the detection sensitivity in dependence on the signal level measured on the light reception arrangement (15) associated with the pre-sensing beam (9).

3. A laser radar device in accordance with claim 1, **characterized in that** means are present in the light reception arrangement (17) of the main beam (10) to adjust the amplification of an avalanche photo diode in dependence on the signal level measured on the light reception device (15) associated with the pre-sensing beam (9).

4. A laser radar device in accordance with claim 1, **characterized in that** means are present in an electrical control unit for the pulsed laser (1) to adjust the output power of the light pulses in dependence on the signal level measured on the light reception arrangement (15) associated with the pre-sensing beam (9).

5. A laser radar device in accordance with any one of the preceding claims, **characterized in that** the optical beam splitting element only feeds a slight portion of energy from the incident light pulse to the pre-sensing beam (9).

6. A laser radar device in accordance with any one of the preceding claims, **characterized in that** the optical beam splitting element preferably only feeds a portion of energy less than 1% from the incident light pulse to the pre-sensing beam (9).

7. A laser radar device in accordance with any one of the preceding claims, **characterized in that** an angle (α) is formed between the pre-sensing beam (9) and the main beam (10) by the optical beam splitting element, said angle being of the same magnitude as the angle change the light deflection unit (5) causes between two light pulses.

8. A laser radar device in accordance with any one of the preceding claims, **characterized in that** the optical beam splitting element attached to the light deflection unit (5) for the separation of the pre-sensing beam (9) and the main beam (10) is an optical diffraction grating (8.1).

9. A laser radar device in accordance with any one of the preceding claims, **characterized in that** the optical beam splitting element attached to the light deflection unit (5) for the separation of the pre-sensing beam (9) and the main beam (10) is wedge-shaped back surface mirror.

## Revendications

1. Dispositif radar à laser fonctionnant selon le principe du temps de parcours de la lumière comprenant un laser à impulsions (1), qui envoie de façon commandée des impulsions lumineuses successives dans une plage de mesure, un dispositif de réception de lumière (17), qui reçoit les impulsions lumineuses renvoyées sur un objet dans la zone de mesure et les amène sous forme de signaux électriques à une unité d'analyse, qui détermine un signal de distance représentatif de la distance de l'objet au dispositif radar à laser en tenant compte de la vitesse de la lumière à partir du temps s'écoulant entre l'envoi et la réception de l'impulsion lumineuse et une unité de déviation de lumière (5) disposé entre le laser à impulsions et la zone de mesure, au moyen de laquelle les impulsions lumineuses sont déviées de façon continue dans des directions modifiées à travers la zone de mesure, **caractérisé en ce qu'**un élément optique séparateur de faisceau est intégré en supplément dans l'unité de déviation de lumière (5), afin de séparer les impulsions lumineuses arrivant au plan énergétique en un faisceau principal (10) et un faisceau de prébalayage (9), **en ce qu'**un écart d'angle (α) constant dans le sens de la déviation de lumière est provoqué avec l'élément optique séparateur de faisceau entre le faisceau principal et le faisceau de prébalayage et **en ce qu'**un dispositif de réception de lumière (15) supplémentaire est présent pour la réception des impulsions lumineuses, renvoyées sur l'objet, du faisceau de prébalayage (9).

2. Dispositif radar à laser selon la revendication 1, **caractérisé en ce que** des moyens sont présents dans un niveau de traitement de signal électrique, qui est disposé en amont du dispositif de réception de lumière (17) du faisceau principal (10), afin de régler la sensibilité à la détection en fonction du niveau de signal mesuré sur le dispositif de réception de lumière (15) attribué au faisceau de prébalayage (9).

3. Dispositif radar à laser selon la revendication 1, **caractérisé en ce que** des moyens sont présents dans le dispositif de réception de lumière (17) du faisceau principal (10), afin de régler l'amplification d'une Avalanche Photo Diode en fonction du niveau de signal mesuré sur le dispositif de réception de lumière (15) attribué au faisceau de prébalayage (9).

4. Dispositif radar à laser selon la revendication 1, **caractérisé en ce que** des moyens sont présents dans une unité d'actionnement électrique pour le laser à impulsions (1), afin de régler la puissance de sortie des impulsions lumineuses en fonction du niveau de signal mesuré sur le dispositif de réception de lumière (15) attribué au faisceau de prébalayage (9).

5. Dispositif radar à laser selon l'une quelconque des revendications précédentes, **caractérisé en ce que** l'élément optique séparateur de faisceau n'injecte qu'une fraction d'énergie minime de l'impulsion lumineuse arrivant dans le faisceau de prébalayage (9).

6. Dispositif radar à laser selon l'une quelconque des revendications précédentes, **caractérisé en ce que** l'élément optique séparateur de faisceau n'injecte de préférence de l'impulsion lumineuse arrivant qu'une fraction d'énergie inférieure à 1 % dans le faisceau de prébalayage (9).

7. Dispositif radar à laser selon l'une quelconque des revendications précédentes, **caractérisé en ce qu'**un angle (α) entre le faisceau de prébalayage (9) et le faisceau principal (10) est provoqué par l'élément optique séparateur de faisceau, lequel angle est aussi grand que la variation d'angle que l'unité de déviation de lumière (5) provoque entre deux impulsions lumineuses.

8. Dispositif radar à laser selon l'une quelconque des revendications précédentes, **caractérisé en ce que** l'élément optique séparateur de faisceau placé sur l'unité de déviation de lumière (5) pour la séparation du faisceau de prébalayage (9) et du faisceau principal (10) est un réseau de diffraction (8.1) optique.

9. Dispositif radar à laser selon l'une quelconque des revendications précédentes, **caractérisé en ce que** l'élément optique séparateur de faisceau placé sur l'unité de déviation de lumière (5) pour la séparation du faisceau de prébalayage (9) et du faisceau principal (10) est un miroir à surface réfléchissante postérieure en forme de coin.
